# EUROPÄISCHE PATENTSCHRIFT

(11) **EP 2 356 350 B1**
(45) Veröffentlichungstag und Bekanntmachung des Hinweises auf die Patenterteilung: **05.05.2021**
(21) Anmeldenummer: 09799511.2
(22) Anmeldetag: 01.12.2009
(51) Int. Cl.: F16F 13/22, F16F 13/10

(54) **AXIAL DÄMPFENDES HYDROLAGER**
AXIALLY DAMPING HYDRAULIC MOUNT
PALIER HYDRAULIQUE À AMORTISSEMENT AXIAL

(30) Priorität: 11.12.2008 DE 102008054528
(43) Veröffentlichungstag der Anmeldung: 17.08.2011
(73) Patentinhaber: BOGE Elastmetall GmbH, 49401 Damme (DE); Audi AG, 85045 Ingolstadt (DE)
(72) Erfinder: MEYER, Heinrich, 53639 Königswinter (DE); HAGEDORN, Detlev, 85049 Ingolstadt-Gerolfing (DE); VOLLMANN, Stefan, 85049 Ingolstadt-Gerolfing (DE)
(74) Vertreter: Bossmeyer, Jörg Peter
(86) Internationale Anmeldenummer: PCT/DE2009/050067
(87) Internationale Veröffentlichungsnummer: WO 2010/066249

(56) Entgegenhaltungen:
- EP-A1- 1 584 837
- FR-A1- 2 559 864
- GB-A- 2 165 617
- JP-A- 8 270 717
- US-A- 4 925 162

## Beschreibung

Die Erfindung betrifft ein axial dämpfendes Hydrolager nach dem Oberbegriff des Anspruchs 1. Sie bezieht sich auf elastomere Lager mit einer hydraulischen Dämpfung, wie sie beispielsweise im Automobilbau als Motor- beziehungsweise Aggregatlager zur Dämpfung der von dem Verbrennungsmotor auf die Karosserie übertragenen Schwingungen und zur akustischen Entkopplung eingesetzt werden.

Die EP 1 584 837 A1 offenbart eine Schwingungsdämpfungseinrichtung, mit einem oberen Anschlussteil, das mit einem ersten Strukturelement fest verbunden ist, einem unteren Anschlussteil, das mit einem zweiten Strukturelement fest verbunden ist, wobei die beiden Anschlussteile in einer Hauptachse beaufschlagt werden, mindestens zwei mit einem Fluid gefüllten Hydraulikkammern, die durch eine Trennwand getrennt sind und von denen eine mindestens teilweise durch eine verformbare biegsame Wand und durch die Trennwand begrenzt ist, wobei die andere Hydraulikkammer mindestens teilweise durch einen Körper aus Elastomer und die Trennwand begrenzt ist, und einem in der Trennwand angeordneten, ständig offenen Durchgang, der die Hydraulikkammern in Verbindung setzt und durch den das Fluid fließen kann. Die Trennwand ist starr und ringförmig, wobei in ihrer Mitte ein Raum ausgespart ist, in dessen Innerem sich eine Membran in der Hauptachse bewegt. Die Membran ist in einer zur Hauptachse im Wesentlichen senkrechten Ebene zwischen zwei mit der Trennwand verbundenen Gittern positioniert und ist in dieser Achse zwischen diesen beiden Gittern beweglich.

Die GB 2 165 617 A offenbart einen Dämpfer mit einer ersten Flüssigkeitskammer, die eine durch ein elastomeres Lager gebildete erste

Wandung aufweist, einer zweiten Flüssigkeitskammer, die eine durch ein elastomeres Diaphragma gebildete zweite Wandung aufweist, einer zwischen den Flüssigkeitskammern angeordneten Drosselplatte, die zum Austausch von Flüssigkeit zwischen den Kammern einen Flüssigkeitshauptkanal und einen Flüssigkeitshilfskanal umfasst, elastomeren Klappen, zwischen denen die Drosselplatte angeordnet ist, wobei der Hauptkanal in Abhängigkeit von der Belastung des Dämpfers durch die Klappen verschließbar ist, und einer in dem Diaphragma angeordneten Masse, mit welcher das Schwingungsverhalten des Diaphragmas einstellbar ist.

Die US 4 925 162 A offenbart eine Schwingungsdämpfungsvorrichtung mit zwei Rahmenkörpern, die mit separaten Teilen verbunden sind, einem zwischen den Rahmenkörpern unter Ausbildung einer geschlossen Kammer angeordneten elastischen Teil, einem Trennglied, das randseitig an einem der Rahmenkörper gesichert ist und die geschlossene Kammer in zwei kleine Kammern unterteilt, wenigstens einem in dem Trennglied vorgesehenen begrenzten Durchgang, der einen Flüssigkeitsaustausch zwischen den kleinen Kammern ermöglicht, wobei das Trennglied ferner mit einer Schwingungsdämpfungseinheit versehen ist, die zwei jeweils aus Gummi bestehende und wenigstens eine Öffnung umfassende Membranen und eine dazwischen angeordnete perforierte, starre Platte aufweist, wobei jede flexible Membran mit ihrem Randabschnitt an der starren Platte gesichert ist, wobei die flexiblen Membranen an ihren mittigen Abschnitten zu der starren Platte beabstandet und deformierbar sind, sodass sie im Wesentlichen senkrecht zur Ebene der starren Platte schwingen können, während Schwingungen mit hoher Frequenz und kleiner Amplitude auftreten, um den Anstieg der dynamischen Federrate zu unterbinden, und wobei der begrenzte Durchgang in zumindest einem Abschnitt des Trennglieds um die Schwingungsdämpfungseinheit herum vorgesehen ist.

Motorlager beziehungsweise Aggregatlager bestehen im Wesentlichen aus einem metallischen Lagerkern, über welchen das Lager im Allgemeinen auch an dem Motor beziehungsweise dem Aggregat befestigt wird, aus einer zumeist zweiteiligen Außenhülle und einer zwischen dem Lagerkern und einem oberen Teil der Außenhülle angeordneten, kegelstumpfförmigen elastomeren Tragfeder. Je nach Ausbildungsform sind die vorgenannten Teile noch durch ein Gehäuse aufgenommen, durch welches häufig auch die Teile der Außenhülle des Lagers zusammengehalten werden. Soweit die Lager mit einer hydraulischen Dämpfung ausgestattet sind, umgibt die vorgenannte elastomere Tragfeder eine Arbeitskammer zur Aufnahme eines fluiden Dämpfungsmittels. Diese Arbeitskammer ist durch ein sich quer zur Lagerachse erstreckendes Trennelement, nämlich eine Membran, eine so genannte Düsenplatte oder dergleichen, von einer Ausgleichskammer getrennt. Die Ausgleichskammer wird durch einen elastomeren Balg eingefasst, der wiederum im Allgemeinen durch einen unteren Teil der Außenhülle geschützt ist. Im Bereich des sie voneinander räumlich trennenden Trennelements sind die Arbeitskammer und die Ausgleichskammer durch einen Kanal miteinander verbunden, welcher den Übertritt von Dämpfungsmittel zwischen der Arbeitskammer und der Ausgleichskammer ermöglicht. Hierdurch kann das Dämpfungsmittel im Falle axial auf das Lager einwirkender Schwingungen beim Einfedern aus der Arbeitskammer in die Ausgleichskammer entweichen und sich beim Ausfedern wieder aus der Ausgleichskammer in die Arbeitskammer bewegen. Durch das Hin-und-herSchwingen des fluiden Dämpfungsmittels ist eine zusätzliche Dämpfung für axial einwirkende Schwingungen gegeben.

Eine besondere Schwierigkeit bei der Gestaltung der Motorlager besteht darin, diese so auszulegen, dass auch eine wirkungsvolle akustische Kopplung zwischen dem Motor und der Karosserie gegeben ist, so dass durch hochfrequente Schwingungen des Motors entstehende Geräusche nicht auf die Karosserie übertragen werden. Probleme entstehen dabei insbesondere dadurch, dass aufgrund der Mehrzahl der Teile, aus denen die Lager bestehen, an verschiedenen Stellen des Lagers Partialresonanzen entstehen, die sich teilweise sogar noch gegenseitig beeinflussen. Derartige Partialresonanzen führen vor allem bei höheren Frequenzen zu einer unerwünschten Überhöhung der dynamischen Federrate des Lagers und somit zu einer Verschlechterung der akustischen Entkopplung. Die Qualität der Geräuschisolation der Motorlager ist dabei frequenzabhängig. Es ist jedoch sehr schwierig, die einzelnen Partialresonanzen beziehungsweise die Stellen ihres Auftretens zu identifizieren und unter Beibehaltung aller sonstigen von dem Lager geforderten Eigenschaften, wie Dämpfung, Leerlaufentkopplung und Federratenverhältnisse in den verschiedenen Raumrichtungen, derartige Resonanzerscheinungen zu reduzieren.

Aufgabe der Erfindung ist es, eine Lösung bereitzustellen, durch welche bei einem gattungsgemäßen Lager, das heißt bei einem axial dämpfenden Hydrolager, die dynamische Überhöhung der Federrate weitgehend vermieden, zumindest aber deutlich reduziert wird. Dazu ist das Lager so zu gestalten, dass bei seinem Einsatz unter Beibehaltung seiner sonstigen geforderten Dämpfungseigenschaften eine bessere akustische Entkopplung durch eine Reduzierung von Partialresonanzen in dem Lager gegeben ist.

Die Aufgabe wird durch ein axial dämpfendes Hydrolager mit den Merkmalen des Hauptanspruchs gelöst. Vorteilhafte Aus- beziehungsweise Weiterbildungen der Erfindung sind durch die Unteransprüche gegeben. Das zur Lösung der Aufgabe vorgeschlagene axial dämpfende Hydrolager besteht, wie grundsätzlich bekannt, aus einer zwischen einem Lagerkern und einem oberen Teil einer Außenhülle angeordneten kegelstumpfförmigen elastomeren Tragfeder und weist zwei Kammern, nämlich eine Arbeitskammer und eine Ausgleichskammer, zur Aufnahme eines fluiden Dämpfungsmittels auf. Die beiden Kammern sind in der Achsrichtung des Lagers übereinander angeordnet und durch ein sich quer zur Lagerachse erstreckendes Trennelement mit einer Kopplungsmembran voneinander getrennt. Dabei wird die Arbeitskammer durch die elastomere Tragfeder und das Trennelement eingefasst, während die auf der anderen Seite des Trennelements angeordnete Ausgleichskammer neben dem Trennelement von einem elastomeren Balg eingefasst ist, der durch einen unteren Teil der Außenhülle geschützt ist. An dem Trennelement ist ein von mindestens einem Kanalteil eingefasster Kanal ausgebildet, wobei das mindestens eine Kanalteil im Wesentlichen starr ist, jedoch eine geringe elastische Nachgiebigkeit besitzt. Durch diese Nachgiebigkeit und die Anordnung an der Entkopplungsmembran des Trennelements ist das mindestens eine Kanalteil schwingungsfähig, so dass an ihm und im Zusammenspiel mit den übrigen Lagerteilen sich bei Belastung des Lagers gegebenenfalls Bauteileigenresonanzen mit Frequenzen im hörbaren Bereich ergeben.

Um der hierdurch verursachten Überhöhung der dynamischen Federrate beim Auftreten entsprechender Frequenzen axial einwirkender Schwingungen entgegenzuwirken, ist das mindestens eine Kanalteil erfindungsgemäß mit einer zusätzlichen Masse belegt. Dazu ist das Kanalteil mit mindestens einem zusätzlich angeordneten Masseelement starr verbunden. Hierdurch wird eine Verstimmung der Bauteilresonanz erreicht, durch welche diese zu Frequenzen außerhalb des hörbaren Bereichs verschoben wird.

Durch die gewählte Vorgehensweise einer Massebelegung des oder der Kanalteile wird eine Verstimmung der Bauteileigenresonanz erreicht, ohne dass dabei sonstige Eigenschaften des Lagers, wie dessen Dämpfung und Leerlaufentkopplung, beeinflusst werden. Da sich insoweit mit verhältnismäßig kleinen zusätzlichen Massen eine große Wirkung erzielen lässt, führt die vorgeschlagene erfinderische Maßnahme nur zu einer sehr geringen Gewichtszunahme des vorzugsweise aus Leichtbauteilen bestehenden Lagers. Zudem ist das Resonanzverhalten im Zuge der Fertigung des Lagers durch eine variable Anordnung des oder der zusätzlichen Masseelemente und die Bemessung ihrer Masse individuell abstimmbar.

Bei einer praxisgerechten Ausbildungsform des erfindungsgemäßen Hydrolagers ist der Kanal durch zwei ihn ausbildende Kanalteile eingefasst. Der Kanal besteht hierbei aus einer Kanalscheibe und einer Kanalabdeckscheibe und ist radial außen an der Entkopplungsmembran umlaufend ausgebildet. Dem Grundgedanken der Erfindung folgend, sind dabei an der Kanalscheibe und/oder an der Kanalabdeckscheibe ein oder mehrere Massenelemente angeordnet beziehungsweise mit diesen Kanalteilen verbunden. Entsprechend einer möglichen Ausbildungsform eines Lagers mit einem durch zwei Kanalteile ausgebildeten Kanal sind ein mit der Kanalscheibe starr verbundenes Masseelement unterhalb der Entkopplungsmembran und ein mit der Kanalabdeckscheibe starr verbundenes Masseelement oberhalb der Entkopplungsmembran angeordnet. Beide Masseelemente liegen bei dieser Ausführungsform vorzugsweise an der Entkopplungsmembran an. Hierdurch wird auch für kleine Schwingungsamplituden eine Dämpfung durch das Lager erreicht, so dass zum Beispiel bei einem Einsatz als Motorlager das so genannte Mikrostuckern (Microshake) unterbunden wird.

Das oder die zusätzlichen Masseelemente können in unterschiedlicher Weise in das erfindungsgemäße Lager eingebracht beziehungsweise mit dessen Teilen verbunden werden. Gemäß einer vorgesehenen Möglichkeit sind das oder die zusätzlich angeordneten Masseelemente auf das oder die Kanalteile aufgeclipst. Bei einer besonders bevorzugten Ausbildungsform, bei welcher die Kanalteile aus einem Kunststoff bestehen, sind das oder die zusätzlichen Masseelemente durch Einlegeteile aus unbehandeltem Stahl ausgebildet, welche mit dem Kunststoff des oder der Kanalteile umspritzt sind.

Je nach Einsatzfall kann das Lager zudem so ausgebildet sein, dass seine Dämpfung schaltbar ist. Dabei ist es mittels eines Schaltmagneten möglich, das ansonsten freie Spiel der Entkopplungsmembran und damit ihre Nachgiebigkeit einzuschränken. Ein in einem Kraftfahrzeug verbautes Lager kann hierdurch so betrieben werden, dass das zwischen den Kammern angeordnete Trennelement beziehungsweise die Entkopplungsmembran im Leerlauf des Motors freies Spiel hat und somit nicht zur Dämpfung beiträgt, aber im Fahrbetrieb eine Dämpfungswirkung hat. Bei einer solchen schaltbaren Ausbildungsform des erfindungsgemäßen Hydrolagers bildet der Schaltmagnet ein zusätzliches Masseelement im Sinne der Erfindung aus.

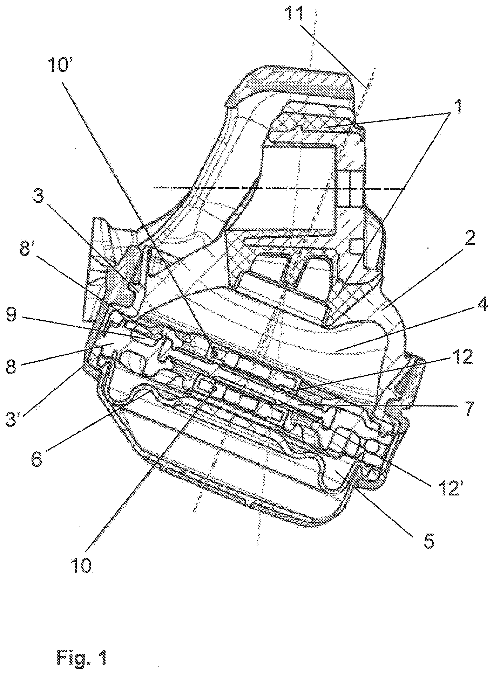

Aspekte der Erfindung sollen nachfolgend nochmals anhand eines Ausführungsbeispiels erläutert werden. Die zugehörige Fig. 1 zeigt eine mögliche Ausbildungsform des erfindungsgemäßen Lagers in einer teilweise geschnittenen Darstellung.

Das Lager besteht aus dem Lagerkern 1, einer zweiteiligen Außenhülle 3, 3' und einer zwischen dem Lagerkern 1 und dem oberen Teil 3 der Außenhülle 3, 3' angeordneten elastomeren Tragfeder 2, welche, wie aus der Figur ersichtlich, eine kegelstumpfförmige Form aufweist. Über die Tragfeder 2 ist der Lagerkern 1, welcher gleichzeitig der Befestigung des Lagers am Einbauort dient, gegen den oberen Teil 3 der Außenhülle 3, 3' abgestützt. Dabei wird von der Tragfeder 2 die zur Aufnahme eines fluiden Dämpfungsmittels dienende Arbeitskammer 4 umgeben. Die Arbeitskammer 4 ist durch ein Trennelement 7, 8, 8' räumlich von der in axialer Richtung unterhalb gelegenen Ausgleichskammer 5 getrennt. Das die Kammern trennende Trennelement besteht aus einer Entkopplungsmembran 7, welche in ihrem radial äußeren Bereich zwischen einer Kanalscheibe 8 und einer Kanalabdeckscheibe 8' quer zur Lagerachse 11 eingespannt ist. Durch die Kanalscheibe 8 und die Kanalabdeckscheibe 8' wird der auf dem Lagerumfang umlaufende Kanal 9 eingefasst. Der Kanal 9 ermöglicht den Übertritt von Dämpfungsmittel zwischen der Arbeitskammer 4 und der Ausgleichskammer 5. Die Ausgleichskammer ist an ihrer Unterseite von einem elastomeren Balg 6 eingefasst, der zum mechanischen Schutz von einem unteren Teil 3' der Außenhülle 3, 3' des Lagers umgeben ist.

Bei dem dargestellten Beispiel bestehen die den Kanal 9 ausbildenden Kanalteile (Kanalscheibe 8 und Kanalabdeckscheibe 8') aus Kunststoff. Mit ihnen starr verbunden sind die erfindungsgemäß vorgesehenen zusätzlichen Masseelemente 10, 10', welche aus unbehandeltem, mit dem Kunststoff der Kanalteile umspritztem Stahl bestehen. Oberhalb und unterhalb der Entkopplungsmembran 7 liegen die Masselelemente 10, 10' an Wülsten 12, 12' der Entkopplungsmembran 7 an. Das gesamte Lager wird von einem Gehäuse aufgenommen, durch welches auch die Teile der Außenhülle 3, 3' miteinander verbunden und gegeneinander sowie mit den Kanalteilen verspannt sind.

### Bezugszeichenliste

1 Lagerkern
2 (elastomere) Tragfeder
3 oberer Teil der Außenhülle
3' unterer Teil der Außenhülle
4 Arbeitskammer
5 Ausgleichskammer
6 Balg
7 Entkopplungsmembran
8 Kanalteil, Kanalscheibe
8' Kanalteil, Kanalabdeckscheibe
9 Kanal
10 Masseelement
10' Masseelement
11 Lagerachse
12 Wulst
12' Wulst

## Patentansprüche

1. Axial dämpfendes Hydrolager mit einer zwischen einem Lagerkern (1) und einem oberen Teil (3) einer Außenhülle (3, 3') angeordneten kegelstumpfförmigen elastomeren Tragfeder (2) und mit einer Arbeitskammer (4) zur Aufnahme eines fluiden Dämpfungsmittels und einer von einem elastomeren, durch einen unteren Teil (3') der Außenhülle (3, 3') geschützten Balg (6) eingefassten Ausgleichskammer (5), welche von der Arbeitskammer (4) durch ein sich quer zur Lagerachse (11) erstreckendes Trennelement (7, 8, 8') mit einer Entkopplungsmembran (7) getrennt ist, wobei an dem Trennelement (7, 8, 8') ein von mindestens einem, im Wesentlichen starren Kanalteil (8, 8') eingefasster Kanal (9) ausgebildet ist, welcher den Übertritt von Dämpfungsmittel zwischen der Arbeitskammer (4) und der Ausgleichkammer (5) ermöglicht, **dadurch gekennzeichnet, dass** das mindestens eine Kanalteil (8, 8') eine geringe elastische Nachgiebigkeit aufweist und dadurch schwingungsfähig ist und mit einer zusätzlichen Masse belegt ist, wozu das mindestens eine Kanalteil (8, 8') mit mindestens einem zusätzlich angeordneten Masseelement (10, 10') starr verbunden ist, wodurch eine Verstimmung einer Bauteileigenresonanz des Lagers erreicht wird, durch welche diese zu Frequenzen außerhalb des hörbaren Bereichs verschoben wird.

2. Axial dämpfendes Hydrolager nach Anspruch 1, bei dem der Kanal (9) mittels zweier Kanalteile (8, 8'), nämlich einer Kanalscheibe (8) und einer Kanalabdeckscheibe (8'), radial außen an der Entkopplungsmembran (7) umlaufend ausgebildet ist, **dadurch gekennzeichnet, dass** die Kanalscheibe (8) und/oder die Kanalabdeckscheibe (8') mit einem Masseelement (10, 10') verbunden sind.

3. Axial dämpfendes Hydrolager nach Anspruch 2, **dadurch gekennzeichnet, dass** ein mit der Kanalscheibe (8) starr verbundenes Masseelement (10) unterhalb der Entkopplungsmembran (7) und ein mit der Kanalabdeckscheibe (8') starr verbundenes Masseelement (10') oberhalb der Entkopplungsmembran (7) angeordnet ist.

4. Axial dämpfendes Hydrolager nach einem der Ansprüche 1 bis 3, **dadurch gekennzeichnet, dass** das oder die zusätzlich angeordneten Masseelemente (10, 10') auf das oder die Kanalteile (8, 8') aufgeklipst sind.

5. Axial dämpfendes Hydrolager nach einem der Ansprüche 1 bis 3, wobei das oder die Kanalteile (8, 8') aus Kunststoff bestehen, **dadurch gekennzeichnet, dass** das oder die zusätzlichen Masseelemente (10, 10') durch Einlegeteile gebildet sind, welche mit dem Kunststoff des oder der Kanalteile (8, 8') umspritzt sind.

6. Axial dämpfendes Hydrolager nach einem der Ansprüche 1 bis 5, **dadurch gekennzeichnet, dass** die Dämpfung des Lagers mittels eines Schaltmagneten schaltbar ist, wobei der Schaltmagnet ein Masseelement (10) ausbildet.

7. Axial dämpfendes Hydrolager nach einem der Ansprüche 1 bis 6, **dadurch gekennzeichnet, dass** durch die Schwingungsfähigkeit des mindestens einen Kanalteils (8, 8') sich an ihm bei Belastung des Lagers Bauteileigenresonanzen ergeben.

8. Axial dämpfendes Hydrolager nach Anspruch 7, **dadurch gekennzeichnet, dass** die Bauteileigenresonanzen sich an dem mindestens einen Kanalteil (8, 8') im Zusammenspiel mit den übrigen Lagerteilen ergeben.

9. Axial dämpfendes Hydrolager nach einem der Ansprüche 1 bis 8, **dadurch gekennzeichnet, dass** das mindestens eine Kanalteil (8, 8') durch seine geringe elastische Nachgiebigkeit und die Anordnung an der Entkopplungsmembran (7) des Trennelements (7, 8, 8') schwingungsfähig ist.

10. Axial dämpfendes Hydrolager nach Anspruch 3, **dadurch gekennzeichnet, dass** beide Masseelemente (10, 10') an der Entkopplungsmembran (7) anliegen.

11. Axial dämpfendes Hydrolager nach Anspruch 10, **dadurch gekennzeichnet, dass** die Masseelemente (10, 10') an Wülsten der Entkopplungsmembran (7) anliegen.

12. Axial dämpfendes Hydrolager nach Anspruch 5, **dadurch gekennzeichnet, dass** das oder die Einlegeteile aus unbehandeltem Stahl bestehen.

## Claims

1. Axially damping hydraulic mount with a frustoconical elastomer support spring (2) arranged between a mount core (1) and an upper part (3) of an outer jacket (3, 3'), and a working chamber (4) for receiving a fluid damping means and an equalising chamber (5) enclosed by an elastomer bellows (6), protected by a lower part (3) of the outer jacket (3, 3'), which is separated from the working chamber (4) by a separating element (7, 8, 8') extending transversely with respect to a longitudinal axis (11) with a separating membrane (7), wherein on the separating element (7, 8, 8') a duct (9) enclosed by at least one substantially rigid duct (8, 8) is formed which enables transfer of damping means between the working chamber (4) and the equalising chamber (5), **characterised in that** the at least one duct part (8, 8') has a low elastic resilience and is thereby able to vibrate and is occupied by an additional mass, to which end the at least one duct part (8, 8') is rigidly connected to at least one additionally arranged mass element (10, 10'), whereby a detuning of a component natural resonance of the mount is achieved, through which this component natural resonance is displaced to frequencies outside of the audible range.

2. Axially damping hydraulic mount according to claim 1, in which the duct (9) is formed by means of two duct parts (8, 8'), namely a duct disc (8) and a duct cover disc (8'), radially surrounding an outside periphery of the separating membrane (7), **characterised in that** the duct disc (8) and/or the duct cover disc (8') is/are connected to a mass element (10, 10').

3. Axially damping hydraulic mount according to claim 2, **characterised in that** a mass element (10) rigidly connected with the duct disc (8) is arranged below the separating membrane (7) and a mass element (10') rigidly connected with the duct cover disc (8') is arranged above the separating membrane (7).

4. Axially damping hydraulic mount according to any one of claims 1 to 3, **characterised in that** the additionally arranged mass elements (10, 10') are clipped onto the duct parts (8, 8').

5. Axially damping hydraulic mount according to any one of claims 1 to 3, wherein the duct part(s) (8, 8') is (are) made of plastic, **characterised in that** the additional mass element(s) (10, 10') is (are) formed as insertion parts which are over-moulded with the plastic, of the duct part(s) (8, 8').

6. Axially damping hydraulic mount according to any one of claims 1 to 5, **characterised in that** the damping of the mount is switchable by means of a switching magnet, wherein the switching magnet forms a mass element (10).

7. Axially damping hydraulic element according to any one of claims 1 to 6, **characterised in that** through the vibration ability of the at least one duct part (8, 8'), when the mount is placed under load, component natural resonances result thereon.

8. Axially damping hydraulic mount according to claim 7, **characterised in that** the component natural resonances result on the at least one duct part (8, 8') in combination with the other mount parts.

9. Axially damping hydraulic mount according to any one of claims 1 to 8, **characterised in that** the at least one duct part (8, 8') through its low elastic resilience and the arrangement of the separating membrane (7) of the separating element (7, 8, 8') is able to vibrate.

10. Axially damping hydraulic mount according to claim 3, **characterised in that** both mass elements (10, 10') sit close to the separating membrane (7).

11. Axially damping hydraulic mount according to claim 10, **characterised in that** the mass elements (10, 10') fit closely to the beading of the separating membrane (7).

12. Axially damping hydraulic mount according to claim 6, **characterised in that** the insertion part(s) is (are) made from steel.

## Revendications

1. Palier hydraulique à amortissement axial, avec un ressort porteur (2) élastomère de forme tronconique disposé entre un noyau de palier (1) et une partie supérieure (3) d'une enveloppe extérieure (3, 3'), et avec une chambre de travail (4) destinée à recevoir un agent d'amortissement fluide et une chambre de compensation (5) bordée par un soufflet (6) élastomère protégé par une partie inférieure (3') de l'enveloppe extérieure (3, 3'), laquelle chambre de compensation est séparée de la chambre de travail (4) par un élément de séparation (7, 8, 8') s'étendant transversalement à l'axe de palier (11) et doté d'une membrane de découplage (7), un conduit (9) bordé par au moins une partie de conduit (8, 8') essentiellement rigide étant constitué sur l'élément de séparation (7, 8, 8'), lequel conduit permet le passage d'agent d'amortissement entre la chambre de travail (4) et la chambre de compensation (5), **caractérisé en ce que** l'au moins une partie de conduit (8, 8') présente une faible flexibilité élastique et est donc susceptible d'osciller et est recouverte d'une masse supplémentaire, l'au moins une partie de conduit (8, 8') étant notamment raccordée de façon rigide à au moins un élément de masse (10, 10') disposé à titre supplémentaire, ce qui permet d'obtenir une modification de l'accord d'une résonance propre de composant du palier grâce à laquelle celle-ci est déplacée vers des fréquences à l'extérieur de la plage audible.

2. Palier hydraulique à amortissement axial selon la revendication 1, dans lequel le conduit (9) est, au moyen de deux parties de conduit (8, 8'), à savoir un disque de conduit (8) et un disque de recouvrement de conduit (8'), constitué, extérieurement et radialement, sur le pourtour de la membrane de découplage (7), **caractérisé en ce que** le disque de conduit (8) et/ou le disque de recouvrement de conduit (8') sont raccordés à un élément de masse (10, 10').

3. Palier hydraulique à amortissement axial selon la revendication 2, **caractérisé en ce qu'**un élément de masse (10) raccordé rigidement au disque de conduit (8) est disposé au-dessous de la membrane de découplage (7), et un élément de masse (10') raccordé rigidement au disque de recouvrement de conduit (8') est disposé au-dessus de la membrane de découplage (7).

4. Palier hydraulique à amortissement axial selon l'une des revendications 1 à 3, **caractérisé en ce que** le ou les éléments de masse (10, 10') disposés de façon supplémentaire sont clipsés sur le ou les parties de conduit (8, 8').

5. Palier hydraulique à amortissement axial selon l'une des revendications 1 à 3, la ou les parties de conduit (8, 8') étant réalisées en matière plastique, **caractérisé en ce que** le ou les éléments de masse (10, 10') supplémentaires sont formés de pièces d'insertion qui sont enrobées avec la matière plastique de la ou des parties de conduit (8, 8').

6. Palier hydraulique à amortissement axial selon l'une des revendications 1 à 5, **caractérisé en ce que** l'amortissement du palier peut être commuté au moyen d'un aimant de commutation, l'aimant de commutation constituant un élément de masse (10).

7. Palier hydraulique à amortissement axial selon l'une des revendications 1 à 6, **caractérisé en ce que** la flexibilité de l'au moins une partie de conduit (8, 8') donne lieu à des résonances propres de composant sur celle-ci quand le palier est soumis à la contrainte.

8. Palier hydraulique à amortissement axial selon la revendication 7, **caractérisé en ce que** les résonances propres de composant apparaissent sur l'au moins une partie de conduit (8, 8') en interaction avec les autres parties de palier.

9. Palier hydraulique à amortissement axial selon l'une des revendications 1 à 8, **caractérisé en ce que** l'au moins une partie de conduit (8, 8') est susceptible d'osciller grâce à sa faible flexibilité élastique et à l'agencement sur la membrane de découplage (7) de l'élément de séparation (7, 8, 8').

10. Palier hydraulique à amortissement axial selon la revendication 3, **caractérisé en ce que** les deux éléments de masse (10, 10') sont adjacents à la membrane de découplage (7).

11. Palier hydraulique à amortissement axial selon la revendication 10, **caractérisé en ce que** les éléments de masse (10, 10') sont adjacents à des bourrelets de la membrane de découplage (7).

12. Palier hydraulique à amortissement axial selon la revendication 5, **caractérisé en ce que** la ou les pièces d'insertion sont réalisées en acier non traité.
